# NOUVEAU FASCICULE DE BREVET EUROPEEN

(11) **EP 0 178 239 B2**
(45) Date de publication et mention de la décision concernant l'opposition: **21.04.1993**
(45) Mention de la délivrance du brevet: 18.04.1990
(21) Numéro de dépôt: 85440050.4
(22) Date de dépôt: 15.07.1985
(51) Int. Cl.: A01B 73/00

(54) **Procédé de transformation d'une machine de récolte pour l'amener d'une position de travail dans une position de transport, et machine de récolte utilisant ce procédé**
Verfahren zum Umbauen einer Erntemaschine von einer Arbeitsposition zu einer Transportposition und Erntemaschine, die dieses Verfahren anwendet
Method to transform a harvesting machine from a working position into a transport position, and harvesting machine using this method

(30) Priorité: 19.07.1984 FR 8411626
(43) Date de publication de la demande: 16.04.1986
(73) Titulaire: KUHN S.A., F-67700 Saverne (FR)
(72) Inventeur: Ermacora, Rino, F-67700 Saverne (FR)

(56) Documents cités:
- AU-B- 514 873
- FR-A- 2 298 268
- US-A- 2 806 707
- US-A- 2 833 105
- US-A- 3 142 144
- US-A- 3 635 495
- US-A- 3 721 461
- US-A- 4 340 239
- US-A- 4 442 662

## Description

La présente invention concerne un procédé de transformation d'une machine de récolte dans le but de l'amener d'une position de travail dans laquelle l'axe longitudinal de son corps s'étend transversalement à la direction de travail, dans une position de transport dans laquelle l'axe longitudinal de son corps s'étend parallèlement, ou au moins sensiblement parallèlement à la direction de transport tout en restant attelée au tracteur.

L'invention concerne également une machine de récolte utilisant un tel procédé et qui comporte:
un corps muni d'outils de travail qui s'appuie au travail sur deux roues de travail s'étendant derrière une partie au moins desdits outils de travail, et au transport sur deux roues de transport, lesdites roues de travail étant liées au corps à l'aide de moyens qui permettent une modification de la position verticale desdites roues de travail par rapport au corps par l'intermédiaire d'un dispositif de commande, et lesdites roues de transport s'étendant au transport sensiblement de part et d'autre du corps et tournent dans des plans de rotation sensiblement parallèles à l'axe longitudinal dudit corps en supportant tout le poids dudit corps, ou au mions sensiblement tout le poids dudit corps; et
un timon qui est lié au corps dans la partie médiane de celui-ci où s'étendent les deux vues de transport, au moyen d'une articulation d'axe dirigé vers le haut, ledit timon pouvant être pivoté depuis au moins une position de travail dans une position de transport à l'aide d'un moyen de commande.

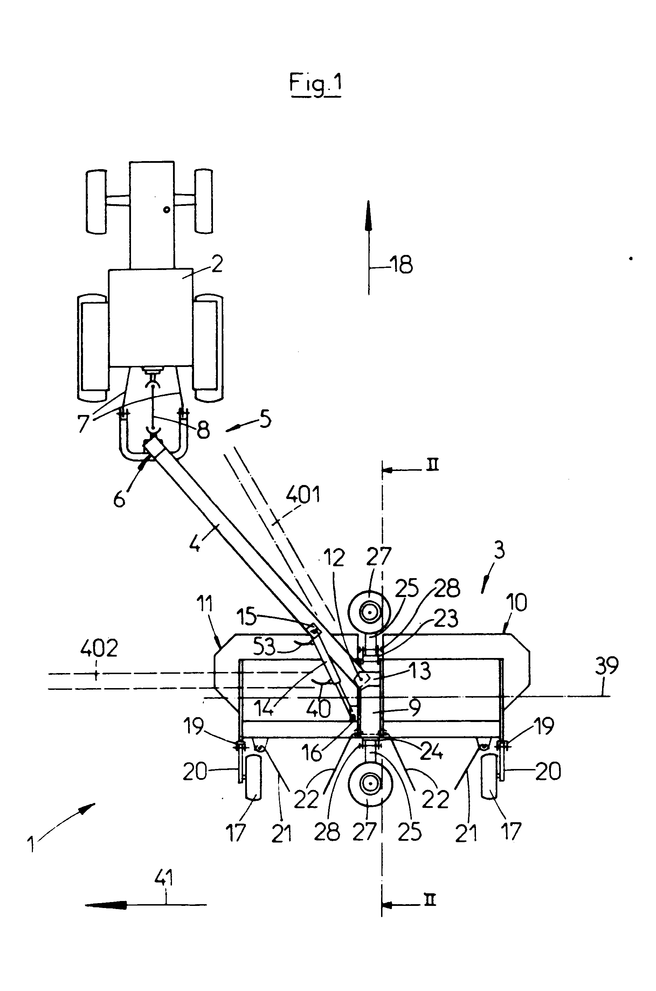

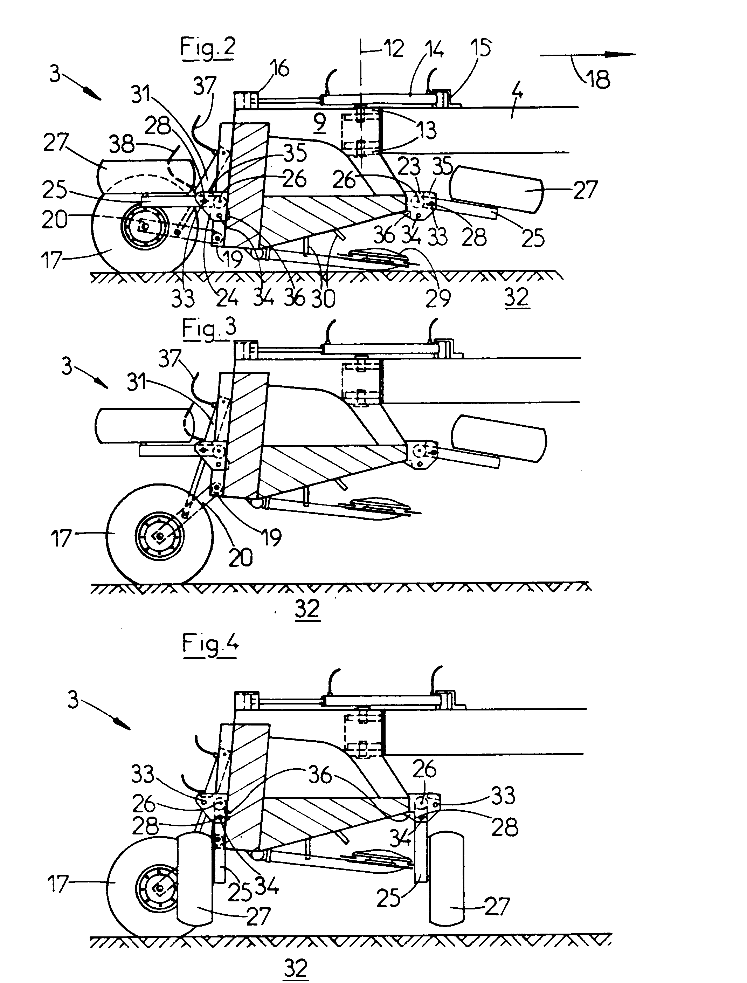

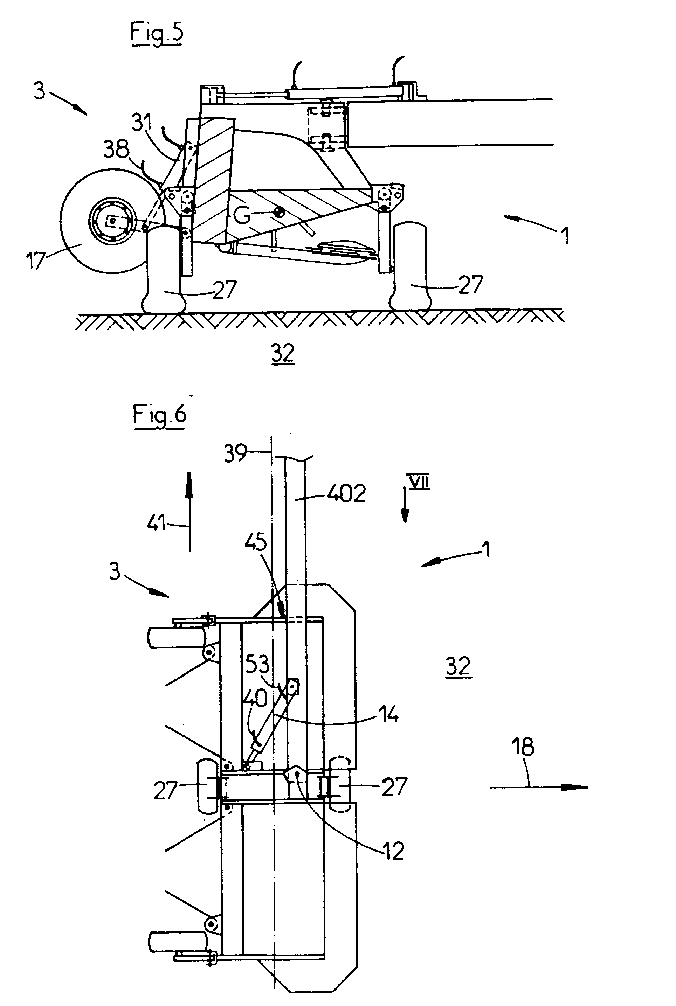

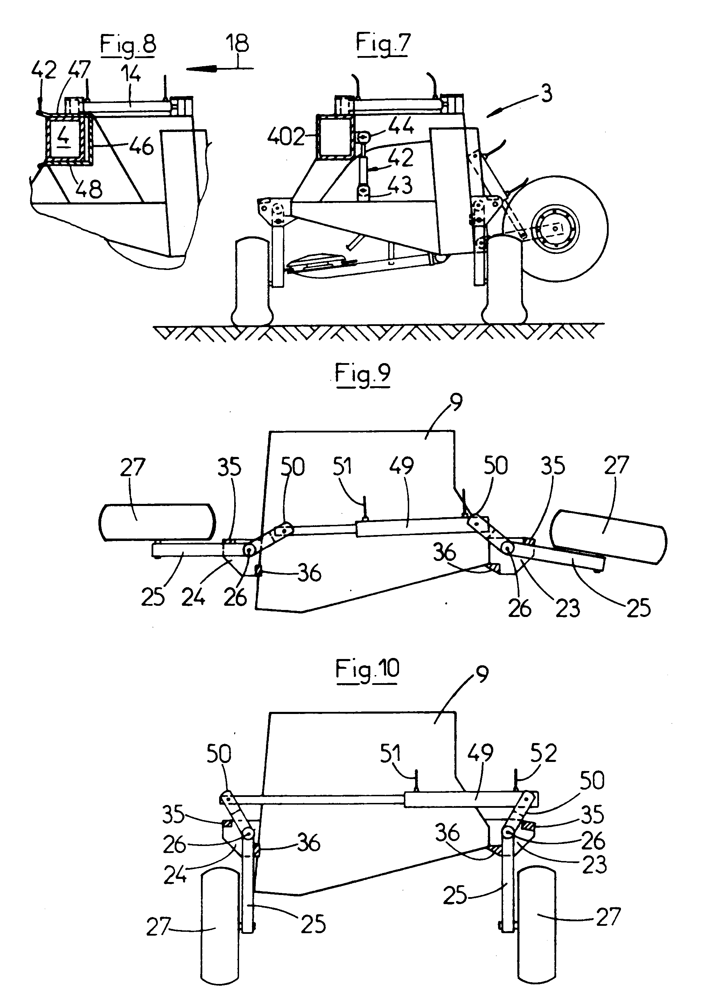

Dans la FR-A-2.298.268 est décrite une machine de récolte comportant un corps qui s'appuie au travail sur deux roues s'étendant à la partie arrière dudit corps, et un timon lié au corps au moyen d'une articulation d'axe dirigé vers le haut, timon par l'intermédiaire duquel la machine de récolte peut être accrochée au dispositif d'attelage d'un tracteur. Le corps de cette machine de récolte connue comporte un châssis qui roule sur le sol au moyen de deux roues et une barre de coupe s'étendant en position de travail devant ledit châssis. Cette barre de coupe est liée au châssis au moyen de bielles formant un parallèlogramme déformable. Un dispositif de relevage à vérins hydrauliques agit sur ledit parallèlogramme pour lever la barre de coupe (Figure 1). Le châssis, quant à lui, se compose d'un châssis principal et d'un châssis auxiliaire mobile qui supporte ledit châssis principal. Ce châssis auxiliaire mobile comprend une première structure supportant le châssis principal au moyen d'un arbre de pivotement vertical et une seconde structure supportant la première structure ainsi que lesdites roues. La première structure comporte un organe tubulaire et la deuxième structure un organe cylindrique susceptible de tourner à l'intérieur de l'organe tubulaire. A chacune de ses extrémités s'étendant au dehors de l'organe tubulaire, l'organe cylindrique est muni d'un bras, à l'extrémité libre duquel est agencée une desdites roues. Cette machine de récolte connue comporte en sus un certain nombre de dispositifs de commande de pivotement réalisés sous forme de vérins hydrauliques. C'est ainsi qu'un premier vérin hydraulique agit entre le corps de la machine et le timon pour amener ce timon dans ses positions de travail (Figures 3 et 8) et dans sa position de transport (Figure 6). Un deuxième vérin hydraulique commande le pivotement du châssis auxiliaire mobile par rapport au châssis principal autour de l'arbre de pivotement vertical pour amener ce châssis auxiliaire mobile dans sa position de travail (Figure 3) et dans sa position de transport (Figure 6). Un troisième vérin hydraulique assure le pivotement de l'organe cylindrique dans l'organe tubulaire, ce qui permet d'éloigner le châssis du sol (Figure 7).

Dans cette machine de récolte connue, il apparaît donc que l'on utilise les mêmes roues tant au travail qu'au transport. Pour ce faire, on pivote le châssis auxiliaire mobile qui comporte le train de roues pour amener l'axe de rotation des roues qui s'étend au travail parallèlement à l'axe longitudinal du corps de la machine (Figure 3), dans une position de transport où cet axe de rotation s'étend perpendiculairement audit axe longitudinal (Figure 6).

A cet effet, le procédé suivant est utilisé:
a) on lève la barre de coupe au moyen des vérins hydrauliques de relevage;
b) on lève ensuite le corps à l'aide du troisième vérin hydraulique de commande;
c) on pivote alors le châssis auxiliaire mobile par rapport au châssis principal au moyen du deuxième vérin hydraulique de commande; et
d) on pivote enfin le timon par rapport au corps au moyen du premier vérin hydraulique de commande.

Ce procédé de transformation connu nécessite tout d'abord des moyens assez complexes, à savoir:
a) un châssis comportant deux parties qui doivent pouvoir pivoter autour d'un axe vertical; et
b) des moyens de levage assez importants pour que le châssis auxiliaire mobile puisse être pivoté dans sa position de transport (Figure 6); ces moyens de levage doivent en effet permettre de soulever de manière très importante le corps de la machine afin que l'une des roues puisse passer sous la barre de coupe lors du pivotement du châssis auxiliaire mobile.

Ensuite, ce procédé de transformation fragilise considérablement la machine. Au transport en effet, le corps de la machine est uniquement supporté par l'arbre de pivotement vertical qui est donc soumis à des contraintes extrêmement importantes.

Ce procédé de transformation rend enfin la machine peu stable au transport étant donné que le centre de gravité du corps de celle-ci s'étend relativement haut. Ceci est dû au fait qu'une roue s'étend, au transport, sous la barre de coupe de la machine.

La présente invention a pour objectif d'éliminer les inconvénients de ce procédé et de cette machine de récolte connus.

A cet effet, le procédé de transformation selon l'invention comporte les phases suivantes, dans l'ordre chronologique mentionné :
on lève le corps qui s'appuie au travail sur deux roues de travail s'étendant derrière une partie au moins des outils de travail du corps pour amener ledit corps dans une position haute, et ceci à l'aide des deux roues de travail;
on met en place deux roues de transport différentes des deux roues de travail et montées à demeure sur le corps, lesdites roues de transport s'étendant au transport sensiblement de part et d'autre du corps et tournant dans des plans sensiblement parallèles à l'axe longitudinal du corps;
on reporte tout le poids, ou au moins, sensiblement tout le poids du corps des deux roues de travail sur les deux roues de transport simultanément ou au moins sensiblement simultanément en levant les deux roues de travail; et
on fait pivoter le timon d'attelage à l'aide d'un moyen de commande par rapport au corps, d'une position de travail dans une position de transport, ledit timon étant lié dans la partie médiane du corps au moyen d'une articulation d'axe dirigé vers le haut et restant attelé au tracteur.

Avec ce procédé, la transformation d'une machine de récolte pour l'amener d'une position de travail dans une position de transport et vice-versa est non seulement très rapide, mais encore très simple, de sorte qu'elle puisse être réalisée par une seule personne. Du reste, il ne complique et ne fragilise pas la machine de récolte qui l'utilise. Il confère enfin au transport une stabilisé relativement importante à la machine.

Selon une caractéristique supplémentaire de l'invention, il peut être prévu que la phase de levage du corps pour l'amener dans une position haute et la phase de mise en place des deux roues de transport se réalisent simultanément, ou au moins sensiblement simultanément.

Selon une autre caractéristique supplémentaire de l'invention, il peut également être prévu que le report du poids du corps des deux roues de travail sur les deux roues de transport et le pivotement du timon d'attelage de la position de travail dans la position de transport se réalisent simultanément, ou au moins sensiblement simultanément.

Le procédé selon l'invention peut comporter une phase supplémentaire qui consiste à mettre en place entre le timon en position de transport et le corps des moyens de liaison supplémentaires évitant les balancements dudit corps pendant le transport. Cette liaison supplémentaire est destinée à éviter le balancement du corps de la machine autour de l'axe joignant les points de contact des roues de transport avec le sol, qui solliciterait de manière très importante l'articulation liant le timon au corps de la machine.

La machine de récolte selon la présente invention, destinée à utiliser le procédé de transformation ci-dessus, est caractérisée par le fait que:
les deux roues de transport sont différentes des deux roues de travail;
chaque roue de transport est liée au corps au moyen d'une articulation d'axe dirigé parallèlement, ou au moins sensiblement parallèlement à la direction de transport de manière à pouvoir être amenée d'une position de repos, où elle ne gène pas l'opération de récolte dans la position de transport; et
le corps présente une structure intermédiaire s'étendant dans la partie médiane dudit corps, au-dessus des outils, de travail, de telle sorte que deux groupes d'outils de travail s'étendent, en vue de dessus, respectivement de part et d'autre de ladite structure intermédiaire compte tenu de la direction de travail, l'une des roues de transport étant articulée à l'avant de la structure intermédiaire en considérant le sens de travail.

Grâce à cette caractéristique, le corps de la machine est parfaitement soutenu par les deux roues de transport. Comme les deux roues de transport sont différentes des deux roues de travail, le corps de la machine n'a pas à être soulevé à une hauteur très importante. La stabilité de la machine au transport s'en trouve ainsi améliorée.

Selon une caractéristique supplémentaire de l'invention, la mise en position de transport ou en position de repos des roues de transport se fait à l'aide de moyens de commande. Grâce à cette caractéristique, toutes les opérations nécessaires pour amener la machine de récolte de la position de travail dans la position de transport et vice-versa, peuvent être faites sans que l'utilisateur ait à descendre du tracteur. Le confort d'utilisation de la machine et la rapidité de la transformation s'en trouvent encore améliorée.

Selon une autre caractéristique supplémentaire de l'invention, le timon est, en position de transport, lié au corps par des moyens de liaison supplémentaires qui évitent le balancement du corps pendant le transport. Ceci permet, comme dit ci-avant, d'éviter durant le transport, la rupture de l'articulation liant le timon au corps de la machine.

Ces moyens de liaison supplémentaires sont particulièrement efficaces lorsqu'ils sont prévus à l'extrémité du corps vers laquelle est pivoté le timon pour le transport.

La mise en place de ces moyens de liaison supplémentaires, respectivement leur neutralisation, sont particulièrement intéressantes lorsque lesdits moyens de liaison supplémentaires se lient automatiquement au timon quand le timon est pivoté dans la position de transport, respectivement se délient automatiquement du timon quand le timon est pivoté hors de la position de transport.

Ceci améliore encore davantage le confort d'utilisation de la machine et la rapidité de la transformation. Du reste, on assure qu'en position de transport, l'articulation liant le timon au corps, soit automatiquement protégée. Tout risque d'oubli de la mise en place des moyens de liaison supplémentaires est donc éliminé.

D'autres caractéristiques et avantages de l'invention apparaîtront ci-après plus en détail dans la description d'une forme de réalisation de l'invention, nullement limitative, faite en référence au dessin annexé, sur lequel:
La Figure 1 représente une vue de dessus d'une machine de récolte selon l'invention utilisant le procédé selon l'invention de trnsformation pour l'amener d'une position de travail dans une position de transport;
La Figure 2 représente une vue latérale partiellement en coupe suivant le plan II-II défini sur la Figure 1;
La Figure 3 visualise la première phase du procédé de transformation selon l'invention;
La Figure 4 visualise la deuxième phase du procédé de transformation selon l'invention;
La Figure 5 visualise la troisième phase du procédé de transformation selon l'invention;
La Figure 6 visualise la quatrième phase du procédé de transformation selon l'invention;
La Figure 7 représente une vue latérale partiellement en coupe suivant la flèche VII définie sur la Figure 6;
La Figure 8 représente une autre forme de réalisation du moyen de liaison supplémentaire entre le timon et le corps de la machine de récolte;
La Figure 9 représente une autre forme de réalisation de la manoeuvre des roues de transport, lesquelles se trouvant en position relevée de repos;
La Figure 10 représente la même forme de réalisation de la manoeuvre des roues de transport que la Figure 9, lesdites roues se trouvant en position de transport.

La machine de récolte (1) selon l'invention, représentée sur la Figure 1, est attelée pendant le travail et le transport à un tracteur (2). Elle se compose d'un corps (3) et d'un timon (4). A sa partie frontale (5), le timon (4) est muni d'un dispositif d'attelage et de transmission (6) connu de l'homme de l'art. Ce dispositif (6) permet l'attelage de la machine (1) au système d'attelage (7) du tracteur (2) et transmet le mouvement qu'il reçoit du tracteur (2) par l'intermédiaire d'un arbre à joints universels (8), aux organes d'entraînement des outils de travail de la machine (1).

Le corps (3) de la machine (1) est formé par trois sous-ensembles principaux: une structure intermédiaire (9) et deux groupes d'outils de travail (10, 11) situés respectivement de part, et d'autre de cette structure intermédiaire (9).

A son extrémité arrière, le timon (4) est lié à la structure intermédiaire (9) au moyen d'une articulation dont l'axe (12) est dirigé vers le haut. A cet effet, la structure intermédiaire (9) comporte une chape (13).

Grâce à cette articulation, le timon (4) peut pivoter par rapport à la structure intermédiaire (9) de sorte qu'il puisse prendre différentes positions par rapport à la structure intermédiaire (9). Le timon (4) tel qu'il est représenté en traits forts sur la Figure 1, se trouve dans une position de travail. En traits mixtes, on a représenté une autre position (401) de travail possible et en traits interrompus, une position (402) de transport.

La position du timon (4) par rapport à la structure intermédiaire (9) est déterminée par des moyens extensibles et rétractables tels que le vérin hydraulique (14) par exemple. Pour ce faire, l'une des extrémités du vérin hydraulique (14) est montée de manière articulée sur le timon (4) qui comporte à cet effet une chape (15), tandis que l'autre extrémité duditvérin hydraulique (14) est montée de manière articulée sur le corps (3) de la machine (1) qui comporte également à cet effet une chape (16).

Au travail, le corps (3) de la machine (1) s'appuie sur le sol au moyen de deux roues de travail (17). Ces roues de travail (17) s'étendant derrière le corps (3) compte tenu du sens d'advance (18) au travail. Pour ce faire, à l'arrière de son extrémité libre, chaque groupe d'outils de travail (10,11) comporte une chape (19) dans laquelle est articulé un bras de suspension (20) à l'extrémité libre duquel est liée la roue de travail (17) correspondante . Grâce à ces articulations, la position de chaque roue (17) peut être modifiée par rapport au groupe d'outils de travail (10, 11) correspondant. Ceci permet donc de modifier la position du corps (3) de la machine (1) par rapport au sol.

Chaque groupe d'outils de travail (10, 11) comporte en sus des moyens de guidage de la récolte (21, 22).

A l'avant et à l'arrière, la structure intermédiaire (9) comporte une chape (23, 24) dans laquelle est articulé un bras (25) autour d'un axe (26) (voir Figure 2) dirige parallèlement ou au moins sensiblement parallèlement à la direction de transport (41). A son extrémité libre, chaque bras (25) est muni d'une roue de transport (27). Comme sur la figure 1, la machine (1) est en position de travail, les roues de transport (27) ne touchent pas le sol et elles sont maintenues dans cette position grâce à un verrou (28) qui empêche la rotation du bras (25) dans la chape (23, 24). Au travail, les roues de transport (27) sont dans une position dans laquelle elles ne gênent pas l'opération de récolte. En effet, à l'arrière, la roue de transport (27) s'étend entre les deux moyens de guidage de la récolte (22), tandis qu'à l'avant, la roue de transport (27) s'étend relativement an avant de la zone de travail des outils de la machine (1).

La figure 2 montre une vue latérale en coupe du corps (3) de la machine (1). Les moyens de guidage de la récolte (21, 22) ont été enlevés pour une meilleure compréhension. Sur cette figure, on voit que la machine (1) est dans l'exemple décrit, une faucheuse-conditionneuse. En effet, on voit que les outils de travail sont composés par des têtes de coupe (29) et des outils de préhension et de conditionnement (30).

Sur cette figure, on retrouve également les roues de travail (17) et les roues de transport (27). Pour ce qui est des roues de travail (17), on voit que l'extrémité du bras de suspension (20) éloignée de la roue (17) pénètre dans la chape (19) qui s'étend à la partie inférieure du corps (3) de la machine (1). Entre le bras de suspension (20) et ledit corps (3) s'étend un dispositif extensible et rétractable tel qu'un vérin hydraulique (31). En ce qui concerne les roues de transport (27), celles-ci se trouvant en position de repos, c'est-à-dire éloignées du sol (32). Elles sont maintenues dans cette position, comme dit précédemment, par un verrou (28) qui traverse la chape (23 ou 24) et le bras (25) de pait en part. A cet effet, les chapes (23, 24) comportent un trou (33. Ces chapes (23, 24) comportent par ailleurs un deuxième trou (34) dans lequel sera introduit le verrou (28) pour maintenir les roues de transport (27) en position de transport. Ces chapes (23, 24) comportent en sus des butées hautes (35) et des butées basses (36). Grâce à celles-ci, il est relativement aisé pour l'opérateur de relever ou d'abaisser les roues de transport (27). En effet, lorsque le bras (25) bute contre la butée haute (35) ou la butée basse (36), on peut introduire sans difficultés le verrou (28) dans les trous correspondants.

Comme visible sur la figure 1, la longueur du corps (3) de la machine (1) mesurée dans une direction perpendiculaire à la direction de travail (18), est plus grande que la largeur du corps (3) de la machine (1) mesurée dans la direction de travail (18). En général, cette longueur est relativement importante de sorte qu'il est presque impossible de transporter la machine (1) parallèlement à la direction de travail (18). Par contre, ladite largeur est, en général, inférieure aux largeurs maximales autorisées, pour le transport sur route. Il est donc avantageux de transporter la machine (1) de sorte que le côté la plus long de son corps (3) s'étende parallèlement à la direction de transport (41). Pour ce faire, la machine (1) doit subir des transformations dont le procédé fait l'objet de la présente invention.

Les figures 3 à 6 visualisent ce procédé de transformation de la machine (1) pour l'amener de la position de travail dans la position de transport.

La première phase est représentée sur la figure 3. Elle consiste à lever le corps (3) de la machine (1) pour l'amener dans une position haute. Pour ce faire, on injecte de l'huile dans les vérins hydrauliques (31) par les conduites (37) pour que ceux-ci s'allongent. S'allongeant, ils produisent la rotation des bras de suspension (20) dans les chapes (19). Comme les roues de travail (17) restent en contact avec le sol (32), cette rotation des bras de suspension (20) dans les chapes (19) provoque l'éloignement du corps (3) du sol (32).

Lorsque le corps (3) de la machine (1) se trouve dans la position haute désirée, telle que représentée sur la figure 3, on passe à la deuxième phase. Celle-ci est représentée sur la figure 4. Elle consiste à amener les roues de transport (27) en position de transport. Pour ce faire, on enlève les verrous (28) des trous (33) et on pivote les roues (27) autour des axes (76) pour les amener dans la position abaissée. Lorsque les bras (25) sont en contact avec les butées basses (36), on introduit les verrous (28) dans les trous (34), ce qui a pour effet de maintenir les roues de transport (27) dans la position de transport. On re- marquers que cette phase est faisable car les roues de transport (27) ne sont pas encore en contact avec le sol (32).

Après que les roues de transport (27) aient été abaissées, on passe à la troisième phase. Celle-ci est représentés sur la figure 5. Elle consiste à reporter tout le poids du corps (3) de la machine (1) ou au moins sensiblement tout le poids des roues de travail (17) sur les roues de transport (27). Pour ce faire, on injecte de l'huile dans les vérins hydrauliques (31) par les conduites (38) pour que ceux-ci se raccourcissent. Pendant le raccourcissement des vérins hydrauliques (31), les roues de transport (27) se rapprochent du sol (32). Lorsque les roues de transport (27) touchent le sol (32), ce sont alors elles qui vont supporter le poids du corps (3) de la machine (1). En poursuivant le raccourcissement des vérins (31), on décolle alors les roues de travail (17) du sol (32) pour les amener dans une position haute dans laquelle elles ne gè- nent pas su transport. Comme visible, les roues de transport (27) tournent, pendant le transport, dans des plans de rotation sensiblement parallèles à l'axe longitudinal (39) du corps (3) de la machine (1) (voir figure 1). On remarquera que le centre de gravité (G) du corps (3) est relativement près du sol (32). Comme les roues de transport (27) se trouvant sensiblement de part et d'autre du corps (3) de la machine (1 elles sont chargées relativement uniformément. L'ensemble de ces dispositions augmente la stabilité de la machine (1) au transport.

On passe ensuite à la quatrième phase. Celle-ci est représentée sur la figure 6. Elle consiste à faire pivoter le timon (4) par rapport au corps (3) de la machine (1) autour de l'axe (12) pour l'amener dans une position de transport (402) dans laquelle le timon (4) s'étend transversalement à la direction de travail (18) et avantageusement sensiblement parallèlement à l'axe longitudinal (39) du corps (3) de la machine (1). Pour ce faire, on injecte de l'huile dans le vérin hydraulique (14) par la conduite (40). Ceci a pour effet de raccourcir le vérin hydraulique (14). Le raccourcissement du vérin hydraulique (14) provoque le pivotement relatif désiré entre le timon (4) et le corps (3) de la machine (1), autour de l'axe (12). Pendant cette phase, l'avant (5) du timon (4) peut rester attelé au tracteur (2). Le pivotement relatif entre le timon (4) et le corps (3) de la machine (1) provoque la rotation du corps (3) de la machine (1) autour de l'axe (12). Ceci est possible car le corps (3) de la machine (1) s'appuie sur le sol (32) par l'intermédaire des roues de transport (27), et peut donc rouler sur le sol (32).

Après cette quatrième phase, la machine (1) se trouve en position de transport dans laquelle elle se déplacers dans uns direction (41) sensiblement parallèle à son axe longitudinal (39). Dans cette position, le déplacement de la machine (1) est plus aisé et sont transport sur route peut devenir possible.

Sur la figure 7, on voit la machine suivant la flèche VII (voirfigure 6). Le timon (4) se trouve en position de transport (402). Afin d'éviter le balancement du corps (3) de la machine (1) pendant le transport, on a agencé un moyen de liaison supplémentaire (42) qui agit entre le corps (3) de la machine (1) et le timon (4). Dans l'example de la figure 7, ce moyen de liaison supplémentaire (42) est constitué par un tirant dont la longueur est variable et ajustable. Ce tirant (42) est d'une part accroché au corps (3) de la machine (1) qui comporte à cet effet une chape (43), et d'autre part, au timon (4) qui comporte également une chape (44). Les chapes (43 et 44) s'étendant dans la zone (45) (voir figure 6). Ainsi, lorsque le timon (4) a été mis en position de transport, l'opérateur peut mettre en place le tirant (42) et ainsi, comme dit plus haut, éviter les risques de détérioration de la chape (13).

La figure 8 montre une autre forme de réalisation du moyen de liaison supplémentaire (42). Celui-ci est formé par une chape (46) qui est fixée dans la zone (45) sur le corps (3) de la machine (1). Cette chape (46) est ouverte vers l'avant dans le sens de travail (18). A l'avant, ses ailes (47, 48) s'écartent pour faciliter l'introduction du timon (4). Ainsi, lorsque le timon (4) est amené en position de transport (402) à l'aide du vérin hydraulique (14), il pénètre en fin de course entre les deux ailes (47, 48) de la chape (46). Il est ainsi lié de manière supplémentaire au corps (3) de la machine (1), ce qui évitera un balancement du corps (3) de la machine (1). On remarquera que dans cet exemple de réalisation, la liaison supplémentaire au transport entre le timon (4) et le corps (3) de la machine (1) s'effectue automatiquement. On remarquera également que lors de la mise en position de travail à partir de la position de transport, le timon (4) peut également, grâce à la chape (46), se délier automatiquement du moyen de liaison supplémentaire (42).

Alors que dans l'exemple de réalisation qui vient d'être décrit les roues de transport (27) sont amenées manuellement en position abaissée de transport ou en position relevée de repos par l'opérateur, dans l'exemple de réalisation des figures 9 et 10, cette phase se fait grâce à des moyens extensibles et rétractables, tels que le vérin hydraulique (49). Ce vérin hydraulique (49) agit entre les bras (25) qui comportent à cet effet deux prolongations de bras (50). Sur la figure 9, les roues de transport (27) sont en position relevée de repos. La conduite (51) du vérin hydraulique (49) est sous pression, ce qui a tendance à vouloir raccourcir la longueur du vérin (49) qui plaque alors les bras (25) supportant les roues de transport (27) contre les butées hautes (35) et maintient lesdites roues (27) dans cette position. Pour faire pivoter les roues de transport (27) en position abaissée de transport, on lâche la pression de l'huile dans la conduite (51) et on injecte de l'huile dans le vérin (49) par la conduite (52). Ceci a pour effet d'allonger le vérin hydraulique (49). S'allongeant, celui-ci pousse sur les prolongations de bras (50) et force l'ensemble bras (25) roue de transport (27) à pivoter autour de l'axe (26) respectif des chapes (23, 24). Lorsque les bras (25) touchent la butée basse (36), les roues de transport (27) se trouvent alors dans la position voulue. Comme on maintient la pression dans la conduite (52) du vérin (49), les roues de transport (27) sont maintenues dans leur position.

On remarquera que pour relever les roues de transport (27), il suffira de lâcher la pression de l'huile dans la conduite (52) et d'injecter de l'huile dans le vérin (49) par la conduite (51 ). Le vérin (49) se raccourcit alors et fait pivoter les ensembles bras (25)-roue de transport (27) vers le haut jusqu'à ce que les bras (25) touchent les butées hautes (35).

Alors qu'à la lumière des Figures 3 à 6 on a expliqué le procédé selon l'invention de transformation d'une machine de récolte pour l'amener d'une position de travail dans une position de transport, on comprendra que pour amener cette machine de la position de transport dans la position de travail, on fera les différentes opérations dans le sens contraire. Ainsi, on fera pivoter le timon (4) en position de travail en injectant de l'huile dans le vérin hydraulique (14) par la conduite (53), puis on injectera de l'huile dans les vérins hydrauliques (31) par les conduites (37) pour faire descendre les roues de travail (17), on remontera ensuite les roues de transport (27) dans leur position relevée de repos, et enfin on abaissera le corps (3) de la machine (1) pour amener les outils de travail (29, 30) en position de travail.

## Revendications

1. Procédé de transformation d'une machine de récolte (1) dans le butde l'amenerd'une position de travail dans laquelle l'axe longitudinal (39) de son corps (3) s'étend transversalement à la direction de travail (18), dans une position de transport dans laquelle l'axe longitudinal (39) de son corps (3) s'étend parallèlement, ou au moins sensiblement parallèlement à la direction de transport (41) tout en restant attelée au tracteur (2), procédé comportant les phases suivantes, dans l'ordre chronologique mentionné:
on lève le corps (3) qui s'appuie au travail sur deux roues de travail (17) s'étendant derrière une partie au moins des outils de travail (29, 30) du corps (3), pour amener ledit corps (3) dans une position haute, et ceci à l'aide des deux roues de travail (17);
on met en place deux roues de transport (27) différentes des deux roues de travail (17) et montées à demeure sur le corps (3), lesdites roues de transport (27) s'étendant au transport sensiblement de part et d'autre du corps (3) et tournant dans des plans sensiblement parallèles à l'axe longitudinal (39) du corps (3);
on reporte tout le poids du corps (3), ou au moins sensiblement tout le poids du corps (3), des deux roues de travail (17) sur les deux roues de transport (27) simultanément ou au moins sensiblement simultanément en levant les deux roues de travail (17); et
on fait pivoter le timon d'attelage (4) à l'aide d'un moyen de commande (14) par rapport au corps (3), d'une position de travail dans une position de transport, ledit timon (4) étant lié dans la partie médiane du corps (3) au moyen d'une articulation d'axe (12) dirigé vers le haut et restant attelé au tracteur (2).

2. Procédé de transformation d'une machine de récolte dans le but de l'amener d'une position de travail dans une position de transport selon la revendication 1, caractérisé par le fait que la phase de levage du corps (3) pour l'amener dans une position haute et la phase de mise en place des deux roues de transport (27) se réalisent simultanément, ou au moins sensiblement simultanément.

3. Procédé de transformation d'une machine de récolte dans le but de l'amener d'une position de travail dans une position de transport selon la revendication 1 ou 2, caractérisé par le fait que le report du poids du corps (3), des deux roues de travail (17) sur les deux roues de transport (27) et le pivotement du timon d'attelage (4) de la position de travail dans la position de transport se réalisent simultanément, ou au moins sensiblement simultanément.

4. Procédé de transformation d'une machine de récolte dans le but de l'amener d'une position de travail dans une position de transport selon l'une au moins des revendications 1 à 3, caractérisé par le fait qu'il comporte une phase supplémentaire qui consiste à mettre en place entre le timon (4) en position de transport (402) et le corps (3) des moyens de liaison supplémentaires (42) évitant les balancements dudit corps (3) pendant le transport.

5. Machine de récolte comportant:
un corps (3) muni d'outils de travail (29, 30), qui s'appuie au travail sur deux roues de travail (17) s'étendant derrière une partie au moins desdits outils de travail (29, 30) et au transport sur deux roues de transport (27), lesdites roues de travail (17) étant liées au corps (3) à l'aide de moyens (19, 20) qui permettent une modification de la position verticale desdites roues de travail (17) par rapport au corps (3) par l'intermédiaire d'un dispositif de commande (31), et lesdites roues de transport (27) s'étendant au transport sensiblement de part et d'autre du corps (3) et tournent dans des plans de rotation sensiblement parallèles à l'axe longitudinal (39) dudit corps (3) en supportant tout le poids dudit corps (3), ou au moins sensiblement tout le poids dudit corps (3); et
un timon (4) qui est lié au corps (3) dans la partie médiane de celui-ci où s'étendent les deux roues de transport (27), au moyen d'une articulation d'axe (12) dirigé vers le haut, ledit timon (4) pouvant être pivoté depuis au moins une position de travail (4, 401) dans une position de transport (402) à l'aide d'un moyen de commande (14);
ladite machine de récolte (1), destinée à utiliser le procédé de transformation selon l'une au moins des revendications 1 à 4, étant caractérisée par le fait que:
les deux roues de transport (27) sont différentes des deux roues de travail (17);
chaque roue de transport (27) est liée au corps (3) au moyen d'une articulation d'axe (26) dirigé parallèlement, ou au moins sensiblement parallèlement à la direction de transport (41) de manière à pouvoir être amenée d'une position de repos, où elle ne gène pas l'opération de récolte dans la position de transport; et
le corps (3) présente une structure intermédiaire (9) s'étendant dans la partie médiane dudit corps (3), au dessus des outils de travail (29, 30), de telle sorte que deux groupes d'outils de travail (29, 30) s'étendent, en vue de dessus, respectivement de part et d'autre de ladite structure intermédiaire (9) compte tenu de la direction de travail (18), l'une des roues de transport (27) étant articulée à l'avant de la structure intermédiaire (9) en considérant le sens de travail (18).

6. Machine de récolte selon la revendication 5, caractérisée par le fait que la position de transport de chaque roue de transport (27) est définie par une butée basse (36).

7. Machine de récolte selon l'une des revendications 5 ou 6, caractérisée par le fait que la position de repos de chaque roue de transport (27) est définie par une butée haute (35).

8. Machine de récolte selon l'une au moins des revendications 5 à 7, caractérisée par le fait que la mise en position de transport ou en position de repos des roues de transport (27) se fait à l'aide de moyens de commande (49).

9. Machine de récolte selon l'une au moins des revendications 5 à 8, caractérisée par le fait que le timon (4) et les deux roues de transport (27) sont liés à ladite structure intermédiaire (9).

10. Machine de récolte selon l'une au moins des revendications 5 à 9, caractérisée par le fait qu'en position de transport, le timon (4) est lié au corps (3) par des moyens de liaison supplémentaires (42) qui évitent le balancement du corps (3) pendant le transport.

11. Machine de récolte selon la revendication 10, caractérisée par le fait que lesdits moyens de liaison supplémentaires (42) sont prévus à l'extrémité du corps (3) vers laquelle est pivoté le timon (4) pour le transport.

12. Machine de récolte selon l'une des revendications 10 ou 11, caractérisée par le fait que les moyens de liaison supplémentaires (42) se lient automatiquement au timon (4) lorsque le timon (4) est pivoté dans la position de transport.

13. Machine de récolte selon l'une au moins des revendications 10 à 12, caractérisée par le fait que les moyens du liaison supplémentaires (42) se délient automatiquement du timon (4), lorsque le timon (4) est pivoté hors de la position de transport.

14. Machine de récolte selon l'une au moins des revendications 5 à 13, caractérisée par le fait que la machine (1) est une faucheuse.

15. Machine de récolte selon la revendication 14, caractérisée par le fait que la faucheuse comporte des organes de conditionnement (30).

## Claims

1. A method of converting a harvesting machine (1) so as to bring it from a working position in which the longitudinal axis (39) of its body (3) extends transversely to the direction of work (18) into a transport position in which the longitudinal axis (39) of its body (3) extends in parallel or at least substantially in parallel to the direction of transport (41) whilst remaining being coupled to the tractor (2), said method comprising the following phases in the mentioned chronological order:
the body (3) which, during work, is supported by two working wheels (17) which extend behind a part at least of the working tools (29, 30) of the body (3), is raised to bring said body (3) into a high position by means of the two working wheels (17);
two transport wheels (27) which differfrom the two working wheels (17) and which are permanently mounted on the body (3), are placed in position, the said transport wheels (27) extending during the transport substantially on both sides of the body (3) and rotating in planes substantially parallel to the longitudinal axis (39) of the body (3);
the entire weight of the body (3) or at least substantially the entire weight of the body (3) is transferred from the two working wheels (17) simultaneously or at least substantially simultaneously to the two transport wheels (27), by raising the two working wheels (17); and
the draw-bar (4) is pivoted in relation to the body (3) by means of a control means (14) from a working position into a transport position, said draw-bar (4) being connected to the median part of the body (3) by means of a joint having an upwardly directed axis (12) whilst remaining being coupled to the tractor (2).

2. A method of converting a harvesting machine so as to bring it from a working position into a transport position as claimed in claim 1, characterised in that the phase of raising the body (3) to bring it into a high position and the phase of positioning the two transport wheels (27) are carried out simultaneously or at least substantially simultaneously.

3. A method of converting a harvesting machine so as to bring it from a working position into a transport position as claimed in one of the claims 1 or 2, characterised in that the transfer of the weight of the body (3) from the two working wheels (17) onto the two transport wheels (27) and the pivoting of the draw-bar (4) from the working position into the transport position take place simultaneously or at least substantially simultaneously.

4. A method of converting a harvesting machine so as to bring it from a working position into a transport position as claimed in at least one of the claims 1 to 3, characterised in that it comprises a supplementary phase which includes positioning supplementary coupling means (42), which prevent vibration of the said body (3) during transport, between the draw-bar (4) in the transport position (402) and the body (3).

5. A harvesting machine comprising:
a body (3) equipped with working tools (29, 30) and which, during work, is supported by two working wheels (17) which extend behind a part at least of the said working tools (29, 30) and which, during transport, is supported by two transport wheels (27), where the said working wheels (17) are connected to the body (3) by means (19,20) which permit a modification of the vertical position of said working wheels (17) relative to the body (3) by means of a control device (31), and where, during transport, said transport wheels (27) extend substantially on both sides of the body (3) and rotate in planes of rotation substantially parallel to the longitudinal axis (39) of the said body (3) whilst supporting the entire weight of the body (3) or at least substantially the entire weight of the body (3); and
a draw-bar (4) which is connected to the median part of the body (3) where the transport wheels (27) extend, said connection being achieved by means of a joint having an axis (12) directed upwards, where said draw-bar (4) can be pivoted from at least one working position (4, 401) into a transport position (402) by a control means (14);
said harvesting machine (1) which is intended to use the conversion method claimed in at least one of the claims 1 to 4 being characterised by the fact that:
the two transport wheels (27) differ from the two working wheels (17);
each transport wheel (27) is connected to the body (3) by a joint having an axis (26) extending parallel or at least substantially parallel to the direction of transport (41) so that it can be brought from a rest position, in which it does not disturb the harvesting operation, into the transport position; and
the body (3) comprises an intermediate structure (9) extending in the median part of said body (3) and above the working tools (29, 30), so that two groups of working tools (29, 30) extend, when viewed from above and when considering the working direction (18), respectively on each side ofsaid intermediate structure (9), one of the said transport wheels (27) being articulated, when considering the working direction (18), on the front part of the intermediate structure (9).

6. A harvesting machine as claimed in claim 5, characterised in that the transport position of each transport wheel (27) is defined by a low stop (36).

7. A harvesting machine as claimed in one of the claims 5 or 6, characterised in that the rest position of each transport wheel (27) is defined by a high stop (35).

8. A harvesting machine as claimed in at least one of the claims 5 to 7, characterised in that the transport wheels (27) are brought into the transport position or the rest position with the assistance of control means (49).

9. A harvesting machine as claimed in at least one of the claims 5 to 8, characterised in that the draw-bar (4) and the two transport wheels (27) are connected to the said intermediate structure (9).

10. A harvesting machine as claimed in at least one of the claims 5 to 9, characterised in that in the transport position the draw-bar (4) is connected to the body (3) by supplementary coupling means (42) which prevent the body (3) from vibrating during transport.

11. A harvesting machine as claimed in claim 10, characterised in that the said supplementary coupling means (42) are arranged at that end of the body (3) towards which the draw-bar (4) is pivoted for transport.

12. A harvesting machine as claimed in one of the claims 10 or 11, characterised in that the supplementary coupling means (42) are automatically coupled to the draw-bar (4), when the draw-bar (4) is pivoted into the transport position.

13. A harvesting machine as claimed in at least one of the claims 10 to 12, characterised in that the supplementary coupling means (42) are automatically decoupled from the draw-bar (4) when the draw-bar (4) is pivoted out of the transport position.

14. A harvesting machine as claimed in at least one of the claims 5 to 13, characterised in that the machine (1) is a mower.

15. A harvesting machine as claimed in claim 14, characterised in that the mower comprises conditioning elements (30).

## Patentansprüche

1. Verfahren zum Umstellen einer Erntemaschine (1) mit dem Ziel, sie aus einer Arbeitsstellung, in welcher die Längsachse (39) ihres Körpers (3) quer zur Arbeitsrichtung (18) ausgerichtet ist, in eine Transportstellung zu bringen, in welcher die Längachse (39) ihres Körpers (3) parallel oder zumindest im wesentlichen parallel zur Transportrichtung (41) ausgerichtet ist, wobei die Erntemaschine (1), während dieses Umstellens, mit dem Schlepper (2) gekuppelt bleibt, Verfahren, welches die folgenden Phasen in der angegebenen chronologischen Reihenfolge umfasst:
man hebt den Körper (3) an, der sich im Betrieb auf zwei Arbeitsrädern (17) abstützt, die sich hinter zumindest einem Teil der Arbeitswerkzeuge (29, 30) des Körpers (3) erstrecken, um diesen Körper (3) in eine angehobene Stellung zu bringen, und dies mittels der beiden Arbeitsräder (17) ;
man bringt zwei stets auf dem Körper (3) montierte Transporträder (27), die von den beiden Arbeitsrädern (17) verschieden sind, in Stellung, wobei sich die Transporträder (27) beim Transport im wesentlichen zu beiden Seiten des Körpers (3) befinden und in im wesentlichen zur Längsachse (39) des Körpers (3) parallelen Ebenen rotieren ;
man verlagert das gesamte Gewicht des Körpers (3) oder zumindest im wesentlichen das gesamte Gewicht des Körpers (3) von den beiden Arbeitsrädern (17) gleichzeitig oder zumindest im wesentlichen gleichzeitig auf die beiden Transporträder (27), indem man die beiden Arbeitsräder (17) anhebt; und
man schwenkt mittels einer Steuereinrichtung (14) die Anbaudeichsel (4) in Bezug auf den Körper (3) aus einerArbeitsstellung in eine Transportstellung, wobei die Anbaudeichsel (4) übereine Gelenkverbindung mit aufrechtstehender Achse (12) mit dem mittleren Teil des Körpers (3) verbunden ist und, während derVerschwenkung, mit dem Schlepper (2) gekuppelt bleibt.

2. Verfahren zum Umstellen einer Erntemaschine, um sie aus einer Arbeitsstellung in eine Transportstellung zu bringen, nach Anspruch 1, dadurch gekennzeichnet, dass die Phase des Anhebens des Körpers (3), um ihn in eine angehobene Stellung zu bringen, und die Phase, in der die beiden Transporträder (27) in Stellung gebracht werden, gleichzeitig oder zumindest im wesentlichen gleichzeitig ablaufen.

3. Verfahren zum Umstellen einer Erntemaschine, um sie aus einer Arbeitsstellung in eine Transportstellung zu bringen, nach Anspruch 1 oder 2, dadurch gekennzeichnet, dass die Verlagerung des Gewichts des Körpers (3) von den beiden Arbeitsrädern (17) auf die beiden Transporträder (27) und die Verschwenkung der Anbaudeichsel (4) von der Arbeitsstellung in die Transportstellung gleichzeitig oder zumindest im wesentlichen gleichzeitig stattfinden.

4. Verfahren zum Umstellen einer Erntemaschine, um sie aus einer Arbeitsstellung in eine Transportstellung zu bringen, nach zumindest einem der Ansprüche 1 bis 3, dadurch gekennzeichnet, dass es eine zusätzliche Phase umfasst, die darin besteht, dass man zwischen der in Transportstellung (402) befindlichen Deichsel (4) und dem Körper (3) zusätzliche Verbindungselemente (42) anbringt, um Pendelbewegungen des Körpers (3) während des Transports zu vermeiden.

5. Erntemaschine, bestehend aus :
einem mit Arbeitswerkzeugen (29, 30) ausgestatteten Körper (3), der sich im Betrieb auf zwei Arbeitsrädern (17), die sich hinter, zumindest einem Teil der Arbeitswerkzeuge (29, 30) erstrecken, und beim Transport auf zwei Transporträdern (27) abstützt, wobei die Arbeitsräder (17) mit dem Körper (3) über Elemente (19, 20) verbunden sind, die eine Veränderung der Vertikallage der Arbeitsräder (17) in bezug auf den Körper (3) unter Mitwirkung einer Steuereinrichtung (31) ermöglichen, und wobei sich die Transporträder (27) beim Transport im wesentlichen zu beiden Seiten des Körpers (3) befinden und in zur Längsachse (39) des Körpers (3) im wesentlichen parallelen Ebenen rotieren, indem sie das gesamte Gewicht des Körpers (3) oder zumindest im wesentlichen das gesamte Gewicht des Körpers (3) tragen ; und
einer Deichsel (4), die mit dem Körper (3) im Mittelbereich dieses, wo sich die zwei Transporträder (27) erstrecken, über eine Gelenkverbindung mit aufrechtstehender Achse (12) verbunden ist, wobei die Deichsel (4) mit Hilfe einer Steuereinrichtung (14) aus zumindest einer Arbeitsstellung (4, 401) in eine Transportstellung (402) geschwenkt werden kann ;
wobei die zur Durchführung des Umstellverfahrens nach zumindest einem der Ansprüche 1 bis 4 bestimmte Erntemaschine (1) dadurch gekennzeichnet ist, dass
die beiden Transporträder (27) von den beiden Arbeitsrädern (17) verschieden sind ;
jedes Transportrad (27) mit dem Körper (3) über eine Gelenkverbindung mit zur Transportrichtung (41) paralleler oder zumindest im wesentlichen paralleler Achse (26) derart verbunden ist, dass es aus einer Ruhelage, wo es den Erntevorgang nicht behindert, in die Transportstellung gebracht werden kann ; und
der Körper (3) einen Zwischenteil (9) aufweist, der im Mittelbereich des Körpers (3), oberhalb der Arbeitswerkzeuge (20, 30) derart angeordnet ist, dass zwei Gruppen von Arbeitswerkzeugen (29, 30) sich in der Draufsicht und bezugnehmend auf die Arbeitsrichtung (18) jeweils zu beiden Seiten des Zwischenteils (9) befinden, wobei eines der Transporträder (27), bezugnehmend auf die Arbeitsrichtung (18), am Vorderteil des Zwischenteils (9) angelenkt ist.

6. Erntemaschine nach Anspruch 5, dadurch gekennzeichnet, dass die Transportstellung jedes Transportrades (27) durch einen unteren Anschlag (36) bestimmt ist.

7. Erntemaschine nach einem derAnsprüche 5 oder 6, dadurch gekennzeichnet, dass die Ruhestellung jedes Transportrades (27) durch einen oberen Anschlag (35) bestimmt ist.

8. Erntemaschine nach zumindest einem der Ansprüche 5 bis 7, dadurch gekennzeichnet, dass die Umstellung der Transporträder (27) in Transportstellung oder in Ruhestellung mittels Steuerelementen (49) erfolgt.

9. Erntemaschine nach zumindest einem der Ansprüche 5 bis 8, dadurch gekennzeichnet, dass die Deichsel (4) und die beiden Transporträder (27) mit dem Zwischenteil (9) verbunden sind.

10. Erntemaschine nach zumindest einem der Ansprüche 5 bis 9, dadurch gekennzeichnet, dass die Deichsel (4) in Transportstellung mit dem Körper (3) durch zusätzliche Verbindungselemente (42) verbunden ist, die die Pendelbewegung des Körpers (3) während des Transports ausschalten.

11. Erntemaschine nach Anspruch 10, dadurch gekennzeichnet, dass die zusätzlichen Verbindungselemente (42) an dem Ende des Körpers (3) vorgesehen sind, zu dem die Deichsel (4) für den Transport geschwenkt wird.

12. Erntemaschine nach einem der Ansprüche 10 oder 11, dadurch gekennzeichnet, dass sich die zusätzlichen Verbindungselemente (42) automatisch mit der Deichsel (4) verbinden, wenn die Deichsel (4) in die Transportstellung geschwenkt wird.

13. Erntemaschine nach zumindest einem der Ansprüche 10 bis 12, dadurch gekennzeichnet, dass die zusätzlichen Verbindungselemente (42) automatisch aus der Deichsel (4) ausrasten, wenn die Deichsel (4) aus der Transportstellung geschwenkt wird.

14. Erntemaschine nach zumindest einem der Ansprüche 5 bis 13, dadurch gekennzeichnet, dass die Maschine (1) ein Mähwerk ist.

15. Erntemaschine nach Anspruch 14, dadurch gekennzeichnet, dass das Mähwerk Konditionierorgane (30) umfasst.
